# EUROPEAN PATENT APPLICATION

(11) **EP 3 521 143 A1**
(43) Date of publication of application: **07.08.2019**
(21) Application number: 18154887.6
(22) Date of filing: 02.02.2018
(51) Int. Cl.: B62D 24/00, B60L 11/18

(54) **SMART DRIVE MODULE, VEHICLE FRAME, AND VEHICLE**

(71) Applicant: Emm! solutions GmbH, 71263 Weil der Stadt (DE)
(72) Inventor: Müller, Armin, 71263 Weil der Stadt (DE)
(74) Representative: Meyer zu Bexten, Elmar

(57) **Abstract**

**Problem**

The disadvantages of public transport are to be overcome by using vehicles in a coordinated manner through a cloud function, thus providing for a means of transport that is not confined by location or time. This in turn implies quite specific transportation demands depending on the time of day, such as the alternation between passenger transportation during rush hours and goods traffic at noon or night-time. Vehicle design must reflect these requirements.

**Solution**

The problem is solved by a drive module (10) having left and right corners (11) and an intermediate structure (12) connecting the corners (11), wherein the structure (12) contains a drive module control (13) electronically connected to the corners (11).

## Description

### Technical Field

The invention relates to the products as per the first portion of the independent claims.

### Background Art

At present, transport systems are mainly represented by cars, trucks, buses, trains, special vehicles, and two-wheelers. Individual traffic, while also being independent of location and time, is very comfortable with vehicles having a body but imposes significant space and energy requirements. Public transport and organized mass transit, on the other hand, are space and time bound and therefore less attractive.

The design of an integrated corner module for a narrow urban vehicle including an in-wheel suspension, an electrical in-wheel motor, a friction brake, a steering system, and an active camber mechanism is outlined in RAJAIE, Mohammad-Amin, et al. Development of A Novel Integrated Corner Module for Narrow Urban Vehicles. Proceedings of the Institution of Mechanical Engineers, Part D: Journal of Automobile Engineering. 2018. Figure 3 and the accompanying description of US 20100116572 A (MASSACHUSETTS INSTITUTE OF TECHNOLOGY) 13.05.2010 disclose a drive module having left and right corners and an intermediate structure connecting the corners.

### Summary of invention

The invention as claimed is hereinafter disclosed in such a way that the technical problem with which it deals can be appreciated and the solution can be understood.

### Technical Problem

The disadvantages of public transport are to be overcome by using vehicles in a coordinated manner through a cloud function, thus providing for a means of transport that is not confined by location or time. This in turn implies quite specific transportation demands depending on the time of day, such as the alternation between passenger transportation during rush hours and goods traffic at noon or night-time. Vehicle design must reflect these requirements.

### Solution to Problem

The problem is solved as per the characterizing portion of Claim 1.

### Advantageous effect of invention

The geometric modularization and design of the smart drive module allows for a high level of flexibility in terms of body types or variants and thus application. Furthermore, its symmetrical design permits identical parts to be used in front and rear of the body. Since the smart drive module may be laterally inverted, it is ideally suited for mass production.

Functionally, the smart drive module covers a broad range of applications such as in a trailer, hauler, dozer, or vehicle segment drive and steering where multiple cabins are concatenated. Specifically, it allows for seamless forward motion and reversing - thus eliminating the need for U-turns - as well as secure automated driving owing to its inherent redundancy when used in pairs.

The design of a preferred embodiment enables various energy stores - such as a battery, gas, gasoline, diesel, or hydrogen - and corresponding converters to be accommodated within the intermediate structure, thus simplifying constructional adaptation to desired vehicle operating times and cruising ranges.

In a vehicle thus equipped, the use of two smart drive modules, mutually secured against malfunction of their respective corners, significantly improves tolerance against fault and maloperation.

By integrating energy storage and conversion into the front or rear structure, passive crash behavior is improved for the primary driving directions while maintaining the option to utilize the space above, for instance, as a cargo bay. Also, this setup allows for waste heat to be used directly for heating or cooling. Further, chassis clearance may be minimized, permitting access to the vehicle by means of a maximally flat ramp. Nonetheless, the inclusion of two drive modules, each bearing a 125-kWh battery, would confer upon the vehicle a total battery capacity of 250 kWh. Apparently, these conflicting goals would be unachievable with a battery accommodated in the underbody due to the latter's additional height.

As demonstrated, the substructure or frame of a vehicle as per the invention can easily be adapted to a wide variety of use cases. Finally, the easy replacement of smart drive modules greatly improves the resulting vehicle's maintainability and availability for operation.

### Brief description of drawings

Figure 1 is a perspective view of a smart drive module.
Figure 2 is a perspective view of a vehicle frame for autonomous driving.
Figure 3 is a perspective view of a vehicle frame having a driving cab.
Figure 4 is a perspective view of a vehicle body for passenger transportation.
Figure 5 is a side elevation of a vehicle.

### Description of embodiments

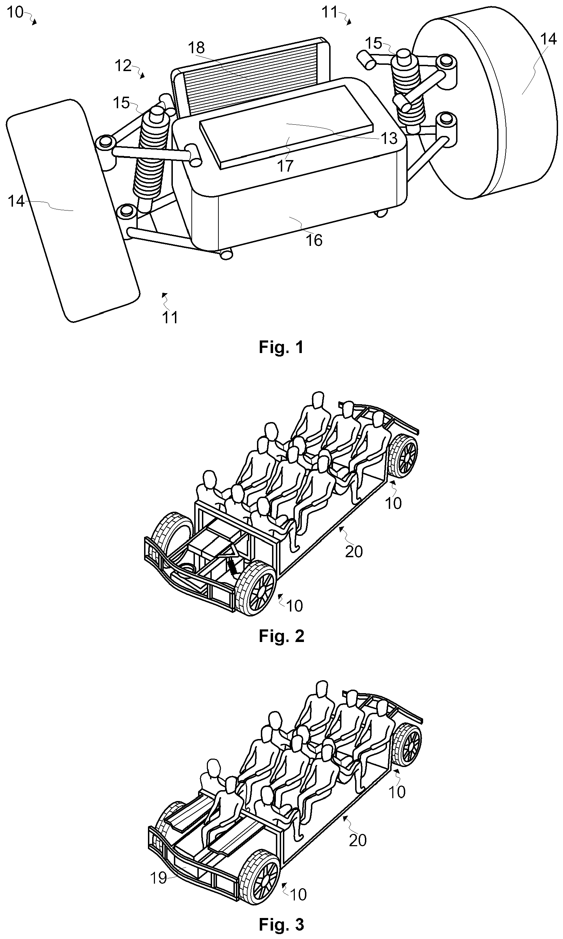

The smart drive module (10) depicted in Figure 1 consists of left and right corners (11) and an intermediate structure (12) enclosed between them. Within this intermediate structure (12), there are provided a power supply - such as a battery or fuel cell -, cooling and heating (18), means for electronic control, monitoring, and external connectivity, and a cabin for integrating or seating a driver. The latter is made possible because not only there exist no moving mechanical connections between the right and left sides, but also the safety-related control (13) of the driving and monitoring of the corners (11) occur at the corners (11) themselves or within the intermediate structure (12). The actual drive propulsion system is integrated in the wheels (14), thus requiring no drive or transmission shafts. In terms of both functionality and safety, this approach renders the smart drive module (10) an entirely independent unit. In a vehicle, this unit - for example, by screwing it on the frame (20) - may be used flexibly in front and rear, as is shown in Figure 2 and Figure 3.

Alternatively, an embodiment could use the smart drive module (10) as a tractor, dozer, or motorized trailer.

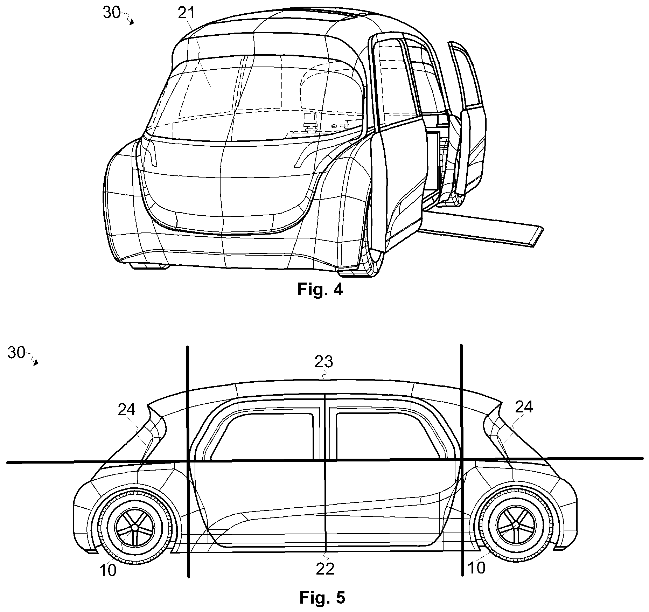

Owing to this configuration and the module's well-defined functional and geometric interfaces, the smart drive module (10) may be combined with various vehicle substructures or frames, allowing for different vehicle bodies to be mounted thereupon. Due to the possibility of swapping its bodyworks or containers, the resulting vehicle can easily be equipped to meet a broad range of requirements. An exemplary body (21) used for passenger transportation is illustrated in Figure 4.

The geometric modularization thus obtained (see Figure 5) serves as a basis for designing the bodies and integrating the smart drive modules for a vehicle (30) as per the invention.

### Industrial applicability

The invention is applicable, inter alia, throughout the automotive industry.

### Reference signs list

- 10: Drive module
- 11: Corners
- 12: Intermediate structure
- 13: Drive module control
- 14: Wheel
- 15: Suspension
- 16: Energy storage
- 17: Cloud storage
- 18: Thermodynamic means (cooling and heating)
- 19: Driving cab
- 20: Vehicle frame
- 21: Body
- 22: Lower utility module
- 23: Upper utility module
- 24: Transition modules
- 30: Vehicle

### Citation list

The following documents are cited hereinbefore.

### Patent literature

US 20100116572 A (MASSACHUSETTS INSTITUTE OF TECHNOLOGY) 13.05.2010

### Non-patent literature

RAJAIE, Mohammad-Amin, et al. Development of A Novel Integrated Corner Module for Narrow Urban Vehicles. Proceedings of the Institution of Mechanical Engineers, Part D: Journal of Automobile Engineering. 2018.

## Claims

1. Drive module (10) having
left and right corners (11) and
an intermediate structure (12) connecting the corners (11),
**characterized in that**
the structure (12) contains a drive module control (13) electronically connected to the corners (11).

2. Module (10) as per Claim 1 wherein
the corners (11) each comprise a wheel (14) and a preferably compact suspension (15).

3. Module (10) as per Claim 2 wherein
the wheel (14) bears a wheel hub motor and brake.

4. Module (10) as per Claim 2 or Claim 3 wherein
the suspension (15) comprises a steering system.

5. Module (10) as per any of the preceding claims wherein
the structure (12) comprises energy storage (16) such as a battery or fuel cell.

6. Module (10) as per Claim 5 wherein
the control (13) is mounted upon the energy storage (16).

7. Module (10) as per any of the preceding claims wherein
the structure (12), preferably within the control (13), further comprises cloud storage (17) on behalf of a vehicle (30).

8. Module (10) as per Claim 7 wherein
the structure (12), preferably the control (13), exhibits connectivity external of the vehicle (30).

9. Module (10) as per any of the preceding claims wherein
the structure (12) further comprises thermodynamic means (18) such as for cooling and heating.

10. Module (10) as per any of the preceding claims wherein
the structure (12) further comprises a cab (19) for seating a driver.

11. Module (10) as per any of the preceding claims wherein
the module (10) is adapted to be screwed on or bolted to a vehicle frame (20).

12. Vehicle frame (20) having
drive modules as per any of the preceding claims.

13. Vehicle (30) having
a frame (20) as per Claim 12 and
a body (21), such as for passenger transportation.

14. Vehicle (30) having
two drive modules (10) as per any of Claim 1 to Claim 12,
a lower utility module (22) connecting the drive modules (10),
an upper utility module (23) resting upon the lower utility module (22).

15. Vehicle (30) as per Claim 14, further having
two transition modules (24), each mechanically connected to the upper utility module (23) and one of the drive modules (10).

## Amended claims

### Amended claims in accordance with Rule 137(2) EPC.

1. Drive module (10) having
left and right corners (11) and
an intermediate structure (12) connecting the corners (11),
**characterized in that**
the structure (12) contains energy storage (16) and a drive module control (13) electronically connected to the corners (11).

2. Module (10) as per Claim 1 wherein
the corners (11) each comprise a wheel (14) and a preferably compact suspension (15).

3. Module (10) as per Claim 2 wherein
the wheel (14) bears a wheel hub motor and brake.

4. Module (10) as per Claim 2 or Claim 3 wherein
the suspension (15) comprises a steering system.

5. Module (10) as per any of the preceding claims wherein
the energy storage (16) takes the form of a battery or fuel cell.

6. Module (10) as per Claim 5 wherein
the control (13) is mounted upon the energy storage (16).

7. Module (10) as per any of the preceding claims wherein
the structure (12), preferably within the control (13), further comprises cloud storage (17) on behalf of a vehicle (30).

8. Module (10) as per Claim 7 wherein
the structure (12), preferably the control (13), exhibits connectivity external of the vehicle (30).

9. Module (10) as per any of the preceding claims wherein
the structure (12) further comprises thermodynamic means (18) for cooling and heating.

10. Module (10) as per any of the preceding claims wherein
the structure (12) further comprises a cab (19) for seating a driver.

11. Module (10) as per any of the preceding claims wherein
the module (10) is adapted to be screwed on or bolted to a vehicle frame (20).

12. Vehicle frame (20) having
drive modules as per any of the preceding claims.

13. Vehicle (30) having
a frame (20) as per Claim 12 and
a body (21), such as for passenger transportation.

14. Vehicle (30) having
two drive modules (10) as per any of Claim 1 to Claim 12,
a lower utility module (22) connecting the drive modules (10),
an upper utility module (23) resting upon the lower utility module (22).

15. Vehicle (30) as per Claim 14, further having
two transition modules (24), each mechanically connected to the upper utility module (23) and one of the drive modules (10).
